# EUROPEAN PATENT APPLICATION

(11) **EP 1 640 963 A1**
(43) Date of publication of application: **29.03.2006**
(21) Application number: 04746704.8
(22) Date of filing: 23.06.2004
(51) Int. Cl.: G09G 3/36, G09G 3/20

(54) **FLAT DISPLAY UNIT**

(30) Priority: 30.06.2003 JP 2003186428
(71) Applicant: SONY CORPORATION, Tokyo 141-0001 (JP)
(72) Inventor: MURASE, Masaki, c/o SONY CORPORATION, Tokyo, 1410001 (JP); NAKAJIMA, Yoshiharu, c/o SONY CORPORATION, Tokyo, 1410001 (JP); KIDA, Yoshitoshi, c/o SONY CORPORATION, Tokyo, 1410001 (JP)
(74) Representative: Thévenet, Jean-Bruno
(86) International application number: PCT/JP2004/009235
(87) International publication number: WO 2005/001804

(57) **Abstract**

The present invention, for example, is applied to a liquid crystal display apparatus in which driving circuits are formed integrally with one another on an insulating substrate. Gradation data Dod and Dev of systems are sampled by horizontal driving circuits 230 and 23E, respectively, at timing corresponding to sampling when the gradation data D11 is classified into a plurality of systems.

## Description

### Technical Field

The present invention relates to a flat display apparatus, and for example, can be applied to a liquid crystal display apparatus in which driving circuits are formed integrally with one another on an insulating substrate. According to the present invention, gradation data of systems is sampled by corresponding horizontal driving circuits at timing corresponding to sampling when the gradation data is distributed to a plurality of systems, whereby a configuration can be simplified and power consumption can be reduced accordingly as compared with a conventional flat display apparatus.

### Background Art

In recent years, in a liquid crystal display apparatus as a flat display apparatus which is applied to a mobile terminal such as a Personal Digital Assistants (PDA) or a mobile phone, driving circuits for a liquid crystal display panel are formed integrally with one another on a glass substrate as an insulating substrate constituting a liquid crystal display panel. As a result, the so-called frame narrowing is realized, whereby a configuration is simplified and power consumption is reduced accordingly.

In such a liquid crystal display apparatus, for example, pixels belonging to odd number columns and pixels belonging to even number columns are driven by a horizontal driving circuit for odd number columns and a horizontal driving circuit for even number columns, respectively. The horizontal driving circuit for odd number columns and the horizontal driving circuit for even number columns are disposed on the upper and lower sides of a liquid crystal display panel, respectively. As a result, the layout of a wiring pattern in a display portion is efficiently performed, and the pixels are disposed with high definition.

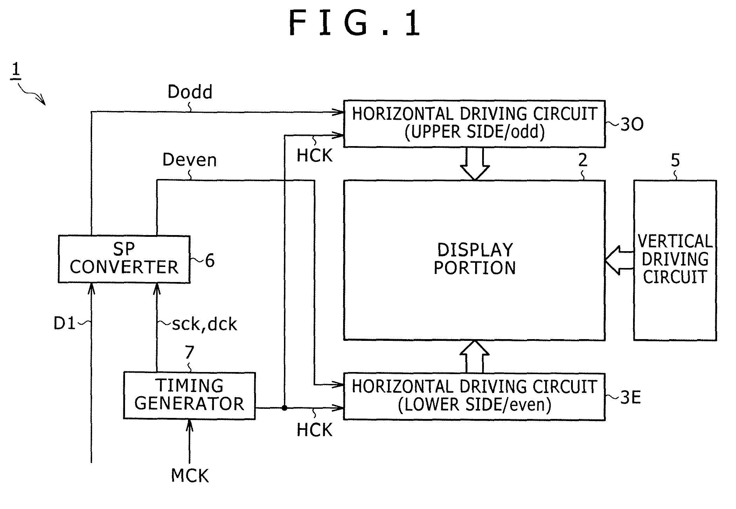

That is, FIG. 1 is a top plan view showing a liquid crystal display apparatus of this sort. In the liquid crystal display apparatus, each pixel is constituted by a liquid crystal cell, a polysilicon Thin Film Transistor (TFT) as a switching element for the liquid crystal cell, and a holding capacitor. Those pixels are disposed in matrix to form a rectangular display portion 2. In the liquid crystal display apparatus 1, a horizontal driving circuit 30 for odd number columns and a horizontal driving circuit 3E for even number columns are formed along mutually-opposite upper and lower sides of the display apparatus 2, respectively. Also, a vertical driving circuit 5 is formed along one side of the remaining two sides each extending longitudinally. In the liquid crystal display apparatus 1, gradation data Dodd for odd number columns and gradation data Deven for even number columns are inputted in the raster scanning order for example through a serial-parallel converter (SP converter) 6, respectively. It should be noted that the gradation data in this case is data representing brightness of each pixel in the display portion 2.

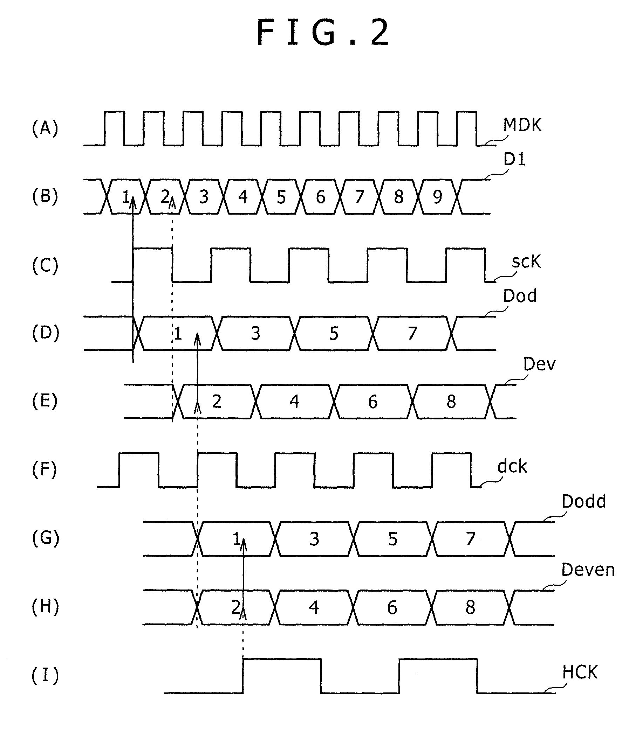

In the liquid crystal display apparatus 1, a timing generator 7 generates and outputs various kinds of timing signals as operational references required for an operation of the liquid crystal display apparatus 1. In this processing, the timing generator 7, as shown in FIG. 2, inputs a master clock MCK, synchronous with image data D1 obtained from serial data supplied to the liquid crystal display apparatus 1, from an upper clock generator (FIG. 2(A) and (B)), and frequency-divides and phase-adjusts the master clock MCK to generate a sampling clock sck (FIG. 2(C)) for the gradation data D1. In addition, the timing generator 7 corrects a phase of the sampling clock sck and generates a clock dck (FIG. 2(F)) for timing correction used to correct a phase of data which is obtained through the sampling with the sampling clock sck as a reference. Also, the timing generator 7 frequency-divides the sampling clock sck and generates a sampling clock HCK (FIG. 2(I)) for sampling, in the horizontal driving circuits 30 and 3E, with respect to the gradation data Dodd for odd number columns and the gradation data Deven for even number columns.

The serial-parallel converter 6, as shown in FIG. 3, inputs the gradation data D1 to a sampling latch 80 for odd number columns and a sampling latch 8E for even number columns, respectively. The sampling latch 8E for even number columns samples the gradation data D1 in accordance with the sampling clock sck and outputs the resulting data (FIG. 2(B),(C), and (E)). On the other hand, the sampling latch 80 for odd number columns receives as its input the sampling clock sck through an inverter 9, and samples the gradation data D1 in accordance with an inverted signal of the sampling clock and outputs the resulting data (FIG. 2(B), (C) and (D)). As a result, the serial-parallel converter 6 sequentially and cyclically samples the gradation data D1 successively inputted thereto to convert the resulting data into the gradation data which is distributed to a plurality of systems. In the liquid crystal display apparatus 1, a plurality of systems are set as two systems, i.e., a system for odd number columns and a system for even number columns.

Phase adjusting circuits 100 and 10E latch output data Dod and Dev from the sampling latches 8O and 8E in accordance with a clock dck for timing correction and correct timing for the gradation data Dod for odd number columns and timing for the gradation data Dev for even number columns, respectively. Thus, the serial-parallel converter 6 outputs gradation data of two systems, i.e., the gradation data Dodd for odd number columns and the gradation data Deven for even number columns which have coincidence timing from the phase adjusting circuits 100 and 10E, respectively (FIG. 2(G) and (H)). Data outputting circuits 110 and 11E are constituted by buffer circuits and output the gradation data Dodd for odd number columns and the gradation data Deven for even number columns to the horizontal driving circuit 30 for odd number columns and the horizontal driving circuit 3E for even number columns which correspond to the gradation data Dodd for odd number columns and the gradation data Deven for even number columns, respectively.

The gradation data Dodd for odd number columns and the gradation data Deven for even number columns are inputted synchronously with each other to the horizontal driving circuit 30 for odd number columns and the horizontal driving circuit 3E for even number columns, respectively. The gradation is set for the pixels belonging to the odd number columns and the pixels belonging to the even number columns based on the gradation data Dodd and Deven. That is, in the horizontal driving circuits 30 and 3E, sampling latches 120 and 12E successively and cyclically latch the image data in a plurality of latches corresponding to the number of odd number columns and the number of even number columns (FIG. 2(G), (H) and (I)). Thus, the horizontal driving circuits 3O and 3E partition off the gradation data Dodd and Deven, which are inputted thereto in the raster scanning order, in lines and temporarily hold the partitioned-off gradation data Dodd and Deven in the sampling latches 120 and 12E, respectively.

Subsequent second latches 130 and 13E simultaneously and parallel latch the latch results from a plurality of latches constituting the sampling latches 120 and 12E each with a period of the horizontal scanning. Thus, the second latches 130 and 13E output collectively the gradation data D1 and D2, which have been partitioned off in lines, in lines to subsequent digital to analog converters (DACs)140 and 14E, respectively. The digital to analog converters 140 and 14E subject the gradation data D1 and D2 of a plurality of systems which have been outputted from the second latches 130 and 13E and output the resulting gradation data D1 and D2, respectively. Thus, the digital to analog converters 140 and 14E generate driving signals for the pixels corresponding to the gradation data D1 and D2, and output the driving signals, respectively. Thus, the horizontal driving circuits 3O and 3E set levels of output signals to the corresponding columns based on the sampling results obtained by the sampling latches 120 and 12E.

With the horizontal driving circuits 30 and 3E, the driving signals of a plurality of systems which have been formed in such a manner are supplied to signal lines (column lines) in the display portion 2. Thus, driving voltages corresponding to the gradation data Dodd and Deven for the pixels which are longitudinally and continuously disposed are sequentially and cyclically set in the signal lines, respectively.

In the vertical driving circuit 5 (FIG. 1), gate lines (row lines) in the display portion 2 are successively selected in correspondence to the setting of the driving voltages in the signal lines and TFTs of the corresponding pixels are successively set in an on state. As a result, a desired image based on the gradation data D1 can be displayed on the liquid crystal display apparatus 1.

Then, in the liquid crystal display apparatus 1, the gradation data Dodd and Deven which have been successively inputted to the sampling latches 120 and 12E of the horizontal driving circuits 3O and 3E in such a manner are successively sampled to be collected in lines, and then transferred to the second latches 130 and 12E. Thus, the order of the latches in the sampling latches 120 and 12E can be variously set in correspondence to the arrangement of the image data D1 inputted to the liquid crystal display apparatus 1. For example, the various kinds of apparatuses relating to those settings have been prepared in Japanese Patent Laid-open No. Hei 10-17371 and Japanese Patent Laid-open No. Hei. 10-177368.

However, it is required for the liquid crystal display apparatus of this sort to simplify the structures of the driving circuits and further reduce the power consumption.

### Disclosure of Invention

The present invention has been made in the light of the above-mentioned problem, and it is, therefore, an object of the present invention to propose a flat display apparatus which is capable of simplifying a configuration and reducing power consumption as compared with the conventional one.

In order to solve the above-mentioned problem, the present invention is applied to a flat display apparatus in which a serial-parallel converter outputs gradation data of a plurality of systems to corresponding horizontal driving circuits at timing corresponding to sequentially cyclic sampling, respectively, and the horizontal driving circuit of the systems samples the gradation data of the corresponding systems in a plurality of sampling circuits at timing corresponding to the sequentially cyclic sampling in the serial-parallel converter.

According to the constitution of the present invention, in the flat display apparatus to which the present invention is applied, the serial-parallel converter outputs the gradation data of a plurality of systems to the corresponding horizontal driving circuits at the timing corresponding to the sequentially cyclic sampling, respectively. The horizontal driving circuits of the systems sample the gradation data of the corresponding systems in a plurality of sampling circuits at the timing corresponding to the sequentially cyclic sampling in the serial-parallel converter, respectively. Thus, after being outputted at the timing corresponding to the sequentially cyclic sampling in the serial-parallel converter, the gradation data of a plurality of systems outputted from the serial-parallel converter is sampled by the horizontal driving through the sampling process corresponding to that timing. As a result, since the gradation data can be outputted to be served to the display of an image without realizing coincidence of the timing from the serial-parallel converter, a configuration for realizing the coincidence of the timing can be omitted to simplify the overall configuration and the power consumption can be reduced accordingly all the more.

### Brief Description of Drawings

FIG. 1 is a block diagram showing a conventional liquid crystal display apparatus;
FIG. 2 is a timing chart explaining an operation of the conventional liquid crystal display apparatus;
FIG. 3 is a block diagram showing in detail a part of the conventional liquid crystal display apparatus;
FIG. 4 is a block diagram showing a liquid crystal display apparatus according to a first embodiment of the present invention;
FIG. 5 is a timing chart explaining an operation of the liquid crystal display apparatus shown in FIG. 4;
FIG. 6 is a block diagram showing in detail a part of the liquid crystal display apparatus shown in FIG. 4;
FIG. 7 is a block diagram showing a horizontal driving circuit shown in FIG. 4;
FIG. 8 is a block diagram showing a part of a liquid crystal display apparatus according to a second embodiment of the present invention;
FIG. 9 is a connection diagram showing a sampling latch in the liquid crystal display apparatus shown in FIG. 8; and
FIG. 10 is a block diagram showing a part of a liquid crystal display apparatus according to a third embodiment of the present invention.

### Best Mode for Carrying out the Invention

Hereinafter, embodiments of the present invention will be described in detail referring to the drawings.

### (1) First Embodiment

### (1-1) Constitution of First Embodiment

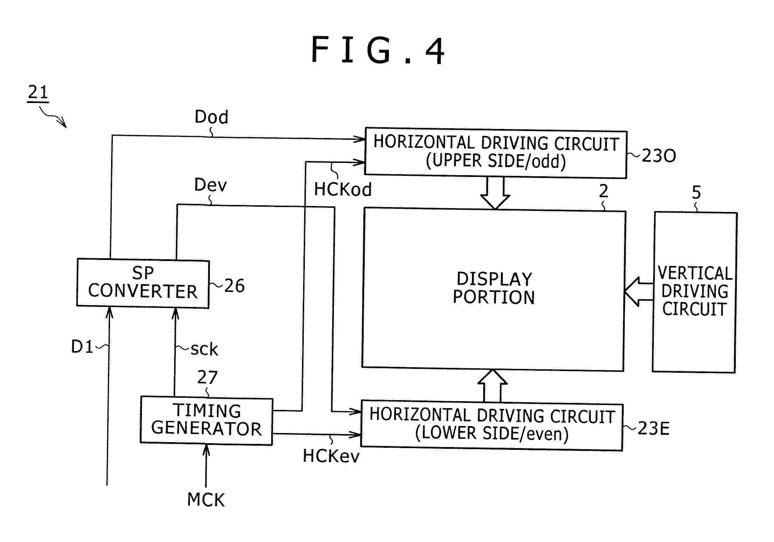

FIG. 4 is a block diagram showing a liquid crystal display apparatus according to this embodiment of the present invention in comparison with FIG. 1. This liquid crystal display apparatus 21 has the same configuration as that of the liquid crystal display apparatus 1 described with reference to FIG. 1 except that a serial-parallel converter 26, horizontal driving circuits 230 and 23E, and a timing generator 27 relating to the serial-parallel converter 26 and the horizontal driving circuits 230 and 23E are different in circuit structure from those in the liquid crystal display apparatus 1 described with reference to FIG. 1.

The liquid crystal display apparatus 21, for example, is incorporated in a mobile phone, and receives as its input gradation data D11 representing gradations for pixels of red, blue and green from a central processing unit for processing image data of the mobile phone. In this embodiment, the gradation data D11 for the pixels of red, blue and green is simultaneously and parallel supplied in the raster scanning order. The six-bit gradation data is allocated to each of the pixels. Thus, in this embodiment, the 18-bit parallel (six bits x 3) gradation data D11 is inputted.

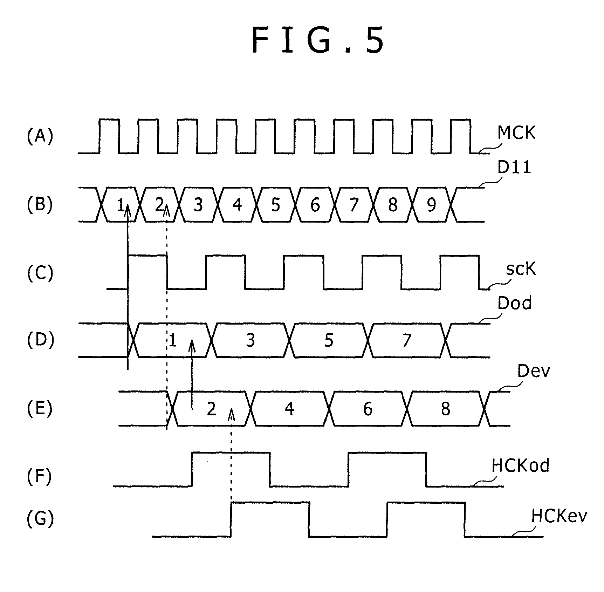

The timing generator 27, as shown in FIG. 5, inputs a master clock MCK synchronous with the gradation data D11 from an upper clock generator (FIG. 5(A) and (B)). The timing generator 27 frequency-divides and phase-adjusts the master clock MCK to generate a sampling clock sck for the image data D11 (FIG. 5(C)). In addition, the timing generator 27 frequency-divides and phase-corrects the sampling clock sck to generate a sampling clock HCKod (FIG. 5(F)) for sampling in the horizontal driving circuit 230 with respect to the gradation data Dodd for odd number columns. Similarly, the timing generator 27 processes the sampling clock sck to generate a sampling clock HCKev (FIG. 5(G)) for sampling, in the horizontal driving circuit 23E, which lags the sampling clock HCKod (FIG. 5(F)) by a phase difference of a 1/4 clock period.

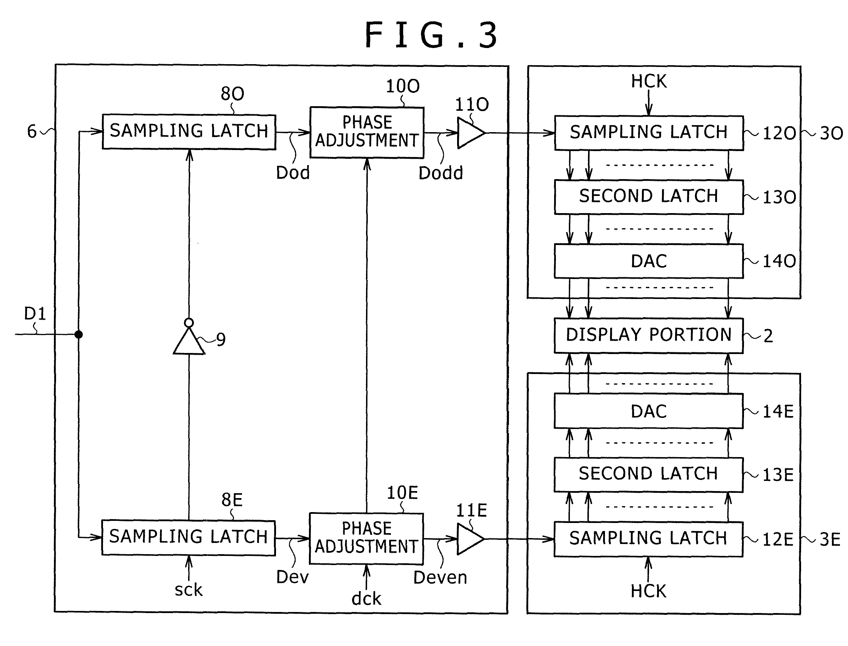

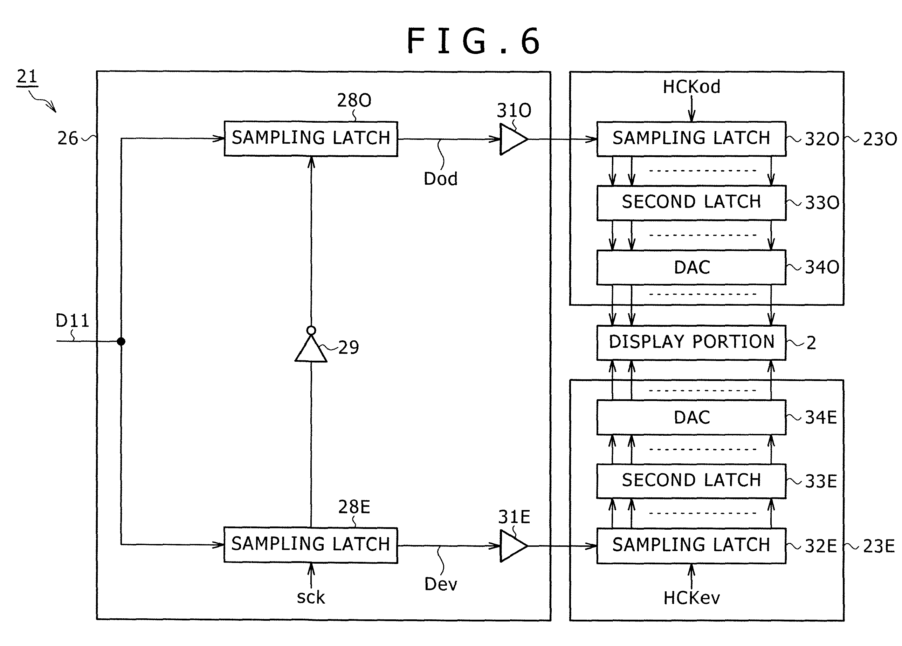

As shown in FIG. 6 in comparison with FIG. 3, the serial-parallel converter 26 inputs the 18-bit parallel gradation data D11 to a sampling latch 280 for odd number columns and a sampling latch 28E for even number columns, respectively. The sampling latch 28E for even number columns samples and outputs the gradation data D11 in accordance with the sampling clock sck (FIG. 5(B), (C) and (E)). On the other hand, the sampling latch 280 for odd number columns receives as its input the sampling clock sck through an inverter 29, and samples and outputs the gradation data D11 in accordance with an inverted signal of the sampling clock sck (FIG. 5(B), (C) and (D)). Thus, the serial-parallel converter 26 alternately distributes the gradation data D1 which has been successively inputted thereto to the sampling latch 280 for odd number columns and the sampling latch 28E for even number columns. In this embodiment, the odd number columns and the even number columns each are constituted by a set of pixels of red, blue and green formed on the display portion 2.

The serial-parallel converter 26 outputs gradation data Dod for odd number columns and gradation data Dev for even number columns which have been latched in the sampling latches 280 and 28E in such a manner, respectively, to the horizontal driving circuit 230 for odd number columns and the horizontal driving circuit 23E for even number columns through data outputting circuits 310 and 31E each having a buffer circuit structure, respectively. Thus, the serial-parallel converter 26 has the same structure as that of the serial-parallel converter 6 described with reference to FIG. 3 except that the phase adjusting circuits are omitted, and the structure is made in correspondence to the number of bits of the gradation data D11.

Thus, the serial-parallel converter 26 outputs the gradation data of a plurality of systems at timing corresponding to the sequentially cyclic sampling in the sampling latches 280 and 28E to the corresponding horizontal driving circuits 230 and 23E, respectively. In this embodiment, the gradation data Dod for odd number columns and the gradation data Dev for even number columns which are different in timing from each other due to the sampling by the sampling latches 280 and 28E are outputted while the different timings remain intact. Thus, for example, when in the display portion 2, one horizontal column is constituted by the pixels of 240 x red, blue and green, the serial-parallel converter 26 divides the gradation data D11 corresponding to the data columns for the pixels of 240 x red, blue and green as the one horizontal column into the gradation data Dod and Dev of two systems each corresponding to the data columns for the pixels of 120 x red, blue and green.

The horizontal driving circuits 230 and 23E have the same structures as those of the horizontal driving circuits 3O and 3E described with reference to FIG. 3 except that the gradation data Dod and Dev of the corresponding systems are successively sampled at the timing corresponding to the sequentially cyclic sampling which is made in the sampling latches 280 and 28E in correspondence to the gradation data Dod and Dev different in timing from each other, more specifically, except that the sampling latches 320 and 32E successively latch the gradation data Dod and Dev in accordance with sampling clocks HCKod and HCKev which are different in timing from each other, respectively, and except that the structures are made so as to correspond to the number of bits of the gradation data Dod and the number of bits of the gradation data Dev.

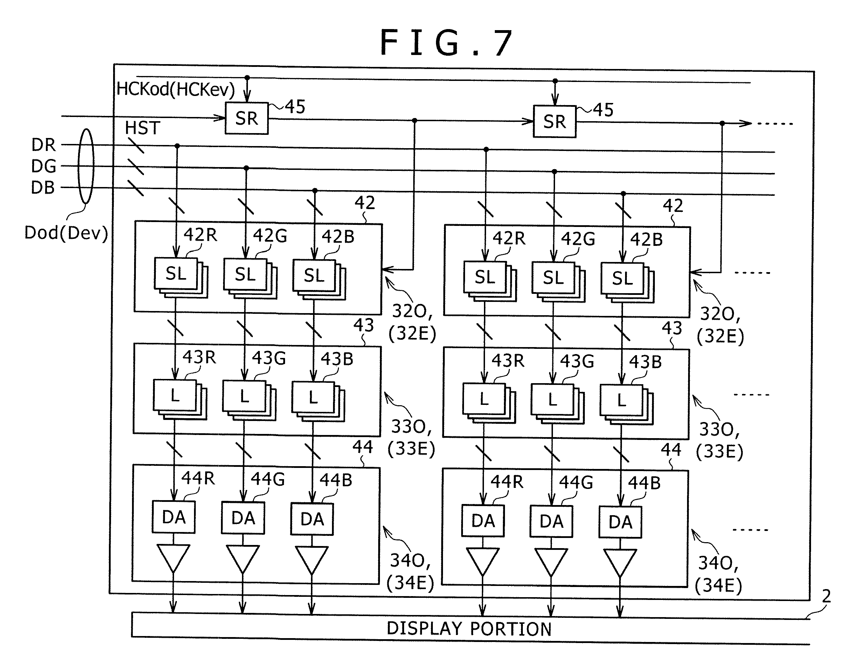

That is, in the horizontal driving circuits 230 and 23E, the sampling latches 320 and 32E sequentially and cyclically latch the gradation data Dod and Dev in a plurality of latches corresponding to the number of columns of the odd number columns and the even number columns with the sampling clocks HCKod and HCKev as references, respectively (FIG. 5(D) to (G)). In this embodiment, as shown in FIG. 7, six-bit gradation data DR, DG and DB corresponding to the pixels of red, green and blue are simultaneously and parallel transmitted as the gradation data D11 (Dod and Dev). Thus, in the sampling latches 320 and 32E, a plurality of sampling latches 42 each having sampling latches (SL) 42R, 42G and 42B for sampling the gradation data DR, DG and DB of red, green and blue, respectively, as one set sequentially and cyclically sample the gradation data Dod and Dev.

The subsequent second latches 330 and 33E (FIG. 6) simultaneously and parallel latch the latch results from the latches constituting the sampling latches 320 and 32E, respectively, with the horizontal scanning period. Thus, the second latches 330 and 33E collectively output the gradation data Dod and Dev which are formed in lines to subsequent digital to analog converters (DACs) 340 and 34E in lines. In this case as well, in the second latches 330 and 33E, as shown in FIG. 7, a plurality of latches (L) 43 each having latches 43R, 43G and 43B for latching the gradation data DR, DG and DB of red, green and blue, respectively, as one set latch the output data from the sampling latches 320 and 32E.

The digital to analog converters 340 and 34E (FIG. 6) subject the gradation data Dod and Dev of a plurality of systems outputted from the second latches 330 and 33E, respectively, to the digital to analog conversion processing and output the resulting gradation data Dod and Dev, thereby generating and outputting driving voltages for the pixels corresponding to the gradation data Dod and Dev, respectively. That is, in this case as well, as shown in FIG. 7, in the digital to analog converters 340 and 34E, a plurality of digital to analog converters 44 each having digital to analog converters (DACs) 44R, 44G and 44B for subjecting the gradation data DR, DG and DB of red, green and blue to the digital to analog conversion processing, respectively, as one set subject output data from the latches 330 and 33E to the digital to analog conversion processing.

Incidentally, in the configuration shown in FIG. 7, reference symbol HST designates a timing pulse which is outputted with the line scanning period. In the horizontal driving circuits 230 and 23E, the shift registers (SRs) 45 successively transfer the timing pulse HST in accordance with a sampling clock HCK to generate sampling pulses for the sampling latches 42R, 42G and 42B.

### (1-2) Operation of First Embodiment

With the configuration described above, in this liquid crystal display apparatus 21 (FIG. 4), the gradation data D11 as the continuous data which represents the gradations of the pixels and is used for the display is successively inputted from the central processing unit or the like of an apparatus having the liquid crystal display apparatus 21 provided therein to the serial-parallel converter 26. The gradation data D11 is sequentially and cyclically sampled by the serial-parallel converter 26 and converted into the gradation data Dod for odd number columns and the gradation data Dev for even number columns. The horizontal driving circuits 230 and 23E output the driving signals corresponding to the gradations of the columns obtained from the gradation data Dod for odd number columns and the gradation data Dev for even number columns, respectively. In addition, the vertical driving circuit 5 sequentially and cyclically selects the lines of the display portion 2, thereby successively setting the gradations of the pixels. As a result, the pixels of the lines which are selected with respect to the corresponding odd number columns and even number columns by the vertical driving circuit 5 are set so as to have the gradations obtained from the gradation data Dod and Dev.

In the liquid crystal display apparatus 21, the gradation data D11 is converted into the gradation data Dod and Dev of the two systems in such a manner. The resulting gradation data Dod and Dev are processed in the horizontal driving circuits 230 and 23E corresponding to the two systems, respectively. Thus, even when the display portion is formed so as to fulfill the high definition and the high data transfer rate for the gradation data D11 is promoted accordingly, the power consumption can be reduced and the image having the high definition can be displayed with the simple configuration all the more since the gradation data D11 can be processed at the reduced processing speed in the horizontal driving circuits 230 and 23E.

In the liquid crystal display apparatus 21 (FIG. 7), with respect to the gradation data D11 processed in such a manner, the three kinds of six-bit gradation data corresponding to the pixels of red, blue and green are set as one set. The three kinds of six-bit gradation data are simultaneously and parallel inputted to the serial-parallel converter 26, and the serial-parallel converter 26 separates the three kinds of six-bit gradation data into two systems. The horizontal driving circuits 230 and 23E process the data separated into two systems, respectively. Thus, the processing speeds of the serial-parallel converter 26, and the horizontal driving circuits 230 and 23E are reduced to reduce the power consumption, so that the image having the high definition can be displayed with the simple configuration.

In addition, in order to process the gradation data in such a manner, the serial-parallel converter 26, the horizontal driving circuits 230 and 23E, the vertical driving circuit 5, and the timing generator 27 are formed integrally with one another on a glass substrate which holds thereon the display portion 2. Moreover, the horizontal driving circuits 230 and 23E are provided on the upper and lower sides of the display portion 2, respectively. As a result, a wiring pattern is efficiently disposed between the pixels and the circuit blocks, so that the image having the high definition can be displayed, the power consumption can be reduced, and the so-called frame narrowing can be realized.

When the horizontal driving circuits 230 and 23E corresponding to the two systems process the gradation data Dod and Dev in such a manner, respectively, in the liquid crystal display apparatus 21 (FIGs. 4 and 6), the serial-parallel converter 26 sequentially and cyclically samples the gradation data D11 and converts the sampled gradation data D11 into the gradation data Dod and Dev of the two systems corresponding to the odd number columns and the even number columns. Thereafter, the gradation data Dod and Dev are outputted to the horizontal driving circuits 230 and 23E while the timing relating to the sampling remains intact. Then, the horizontal driving circuits 230 and 23E sample and process the gradation data Dod and Dev at the timing corresponding to the timing relating to the sampling in the serial-parallel converter 26, respectively.

As a result, in the liquid crystal display apparatus 21, the configuration can be simplified and the power consumption can be reduced all the more as compared with the conventional liquid crystal display apparatus 1 since the phase adjusting circuits (FIG. 3) for correcting the timing for the gradation data Dod and Dev are omitted in the serial-parallel converter 26. More specifically, each of the phase adjusting circuits 100 and 10E described with reference to FIG. 3 is normally constituted by about 20 transistors per one bit. Thus, when the N-bit gradation data relating to each of the red, blue and green is simultaneously and parallel processed as in this embodiment, 20 x 3 x 2 x N transistors are required for the phase adjusting circuits 100 and 10E. Since N bits are six bits in this embodiment, 720 transistors are required. Consequently, since the number of transistors can be reduced in the liquid crystal display apparatus 21 by 720 as compared with the liquid crystal display apparatus 1 described with reference to FIG. 3, the power consumption can be reduced and the frame narrowing can be realized all the more.

Incidentally, though in the liquid crystal display apparatus 21, the structure of the serial-parallel converter 26 can be simplified in such a manner, since the timing generator 27 must output the sampling clocks HCKod and HCKev to the horizontal driving circuits 230 and 23E, respectively, the structure of the timing generator 27 also seems to be complicated. However, since actually, the clock dck for timing correction which is outputted to the phase adjusting circuits 100 and 10E until that time does not need to be outputted, the timing generator 27 can be structured nearly on the same scale as that of the timing generator 27 in the conventional liquid crystal display apparatus 1. As a result, the configuration of the liquid crystal display apparatus 21 can be simplified as compared with the conventional one all the more since the structure of the serial-parallel converter 26 can be simplified.

### (1-3) Effects of First Embodiment

According to the above-mentioned constitution, the serial-parallel converter 26 distributes the gradation data to a plurality of systems, and the corresponding horizontal driving circuits sample the gradation data distributed to the systems at the timing corresponding to the sampling when the gradation data is classified into a plurality of systems. As a result, the configuration can be simplified and the power consumption can be reduced all the more as compared with the conventional liquid crystal apparatus 1 since the configuration for making the phases of the gradation data of a plurality of systems outputted from the serial-parallel converter 26 coincide with one another can be omitted.

In addition, the serial-parallel converter, the horizontal driving circuits corresponding to a plurality of systems, and the timing generator for outputting the timing signals as the operational references to the serial-parallel converter and the horizontal driving circuits corresponding to a plurality of systems are formed integrally with one another on the insulating substrate of the display portion. Thus, the frame narrowing can be realized all the more since the peripheral configuration of the display portion can be simplified.

Also, a plurality of systems are made the systems corresponding to the odd number columns and the even number columns in the display portion, and the horizontal driving circuits of the respective systems are disposed on the upper and lower sides of the display portion. Hence, the layout of the wiring pattern in the display portion can be efficiently performed and thus the pixels can be disposed so as to fulfill the high definition.

### (2) Second Embodiment

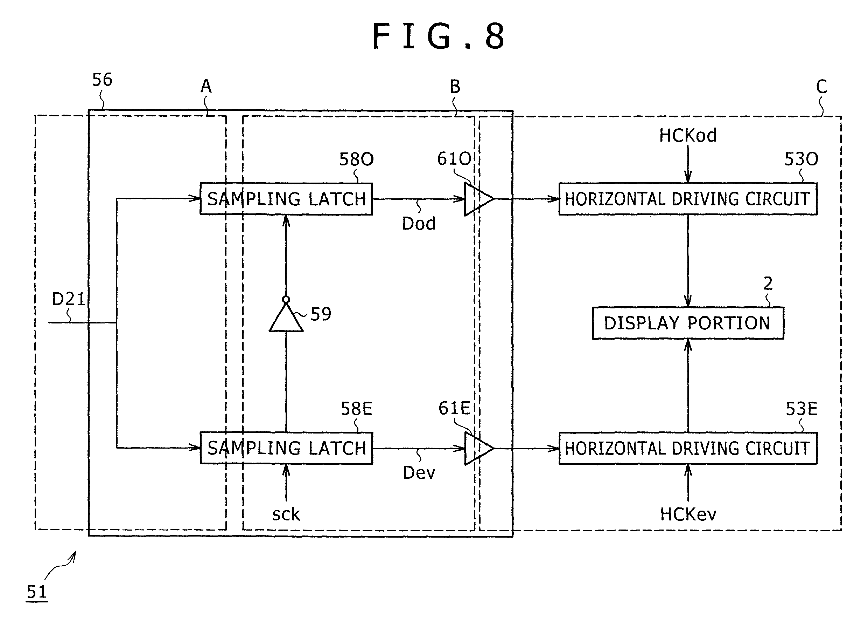

FIG. 8 is a block diagram showing a liquid crystal display apparatus 51 according to a second embodiment of the present invention. In this embodiment, gradation data D21 as continuous gradation data corresponding to the pixels of red, blue and green is inputted, whereby the gradation data D21 is displayed in the form of an image at a transfer rate higher than that in the liquid crystal display apparatus 21, relating to the processing of the gradation data D11, which has been described in the first embodiment.

In this liquid crystal display apparatus 51, a serial-parallel converter 56 sequentially and cyclically latches the gradation data D21 to generate gradation data Dod for odd number columns and gradation data Dev for even number columns. Horizontal driving circuits 530 and 53E drive a display portion 2 by using the gradation data Dod for odd number columns and the gradation data Dev for even number columns, respectively. In the liquid crystal display apparatus 51, the horizontal driving circuits 530 and 53E have the same structures as those of the horizontal driving circuits 230 and 23E according to the first embodiment except for a structure in which the numbers of bits of the gradation data Dod and Dev as a subject of the processing are different from each other in correspondence to the number of bits of the gradation data D21 inputted to the liquid crystal display apparatus 51, and except for a structure in which the odd number columns and the even number columns are set in pixels in the horizontal direction of the display portion 2.

On the other hand, the serial-parallel converter 56 sequentially and cyclically samples the gradation data D21, and outputs the gradation data Dod and Dev of a plurality of systems to the corresponding horizontal driving circuits 530 and 53E at the timing corresponding to that sampling, respectively. As a result, the liquid crystal display apparatus 51 can obtain the same effects as those of the first embodiment.

In this embodiment, when performing sequentially and cyclically the sampling, the serial-parallel converter 56 enlarges the amplitude of the gradation data D21 and converts the resulting gradation data into data of a plurality of systems. Thereafter, the serial-parallel converter 56 reduces the amplitudes of the data of the systems to the original amplitudes, respectively, and outputs the resulting data. As a result, the serial-parallel converter 56 can reliably process the gradation data D21 at the high transfer rate.

For this reason, in the liquid crystal display apparatus 51, as surrounded by broken lines indicated by reference symbols A and C, respectively, in FIG. 8, an input side of the serial-parallel converter 56, an output side of the serial-parallel converter 56, the horizontal driving circuits 530 and 53E, and the like are structured in the form of a low voltage block which is held at the same power source voltage as that of an output circuit for the gradation data D21. In addition, as surrounded by a broken line indicated by a reference symbol B, a remaining circuit block of the serial-parallel converter 56 is structured in the form of a high voltage block which is held at a power source voltage higher than that in the low voltage block.

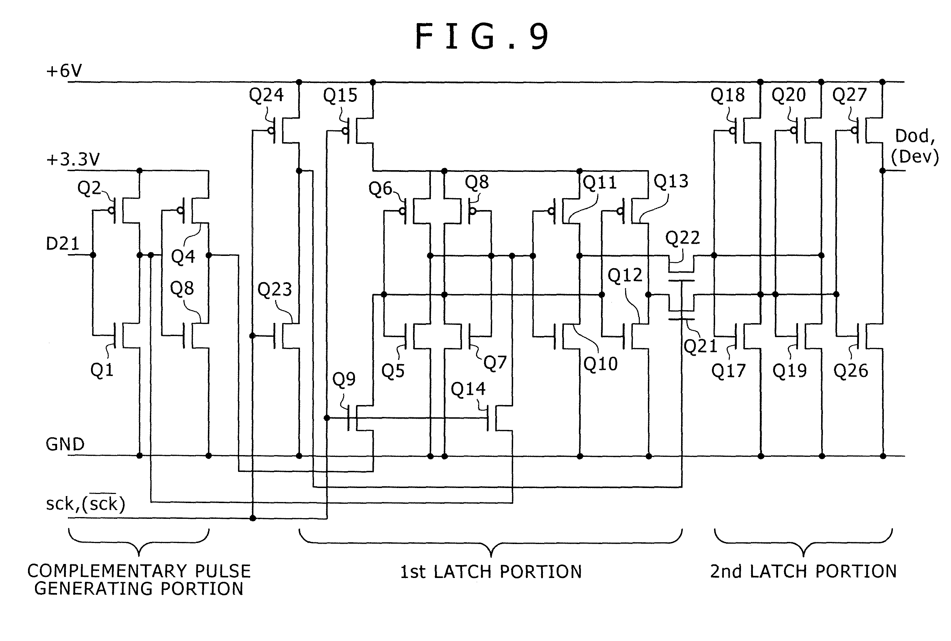

The serial-parallel converter 56 performs such enlargement and reduction of the amplitudes based on the level shift. That is, FIG. 9 is a connection diagram showing a structure for one bit of a sampling latch 580 constituting the serial-parallel converter 56. At that, since a sampling latch 58E for an even number system has the same structure as that of the sampling latch 580 for an odd number system except that a sampling clock sck as an operational reference differs between them, its description is omitted here.

In the serial-parallel converter 56, a CMOS inverter having an N-channel MOS (hereinafter referred to as "an NMOS") transistor Q1 and a P-channel MOS (hereinafter referred to as "a PMOS") transistor Q2 whose gates and drains are connected in common to each other, respectively, and a CMOS inverter having an NMOS transistor Q3 and a PMOS transistor Q4 whose gates and drains are similarly connected in common to each other, respectively, are provided in parallel between a power source line having a power source voltage of 3.3 [V] and the ground. In the serial-parallel converter 56, the two CMOS inverters are connected in series with each other, and gradation data D21 is inputted to the inverter having the transistors Q1 and Q2. Thus, the serial-parallel converter 56 generates an inverted output and a non-inverted output, of the gradation data D21, each having an amplitude of 3.3 [V] through those transistors Q1 to Q4. Those transistors Q1 to Q4 constitute a complementary pulse generating portion.

Moreover, in the serial-parallel converter 56, a CMOS inverter having an NMOS transistor Q5 and a PMOS transistor Q6, and a CMOS inverter having an NMOS transistor Q7 and a PMOS transistor Q8 form a CMOS latch cell which is structured in the form of a comparator. A non-inverted output of the gradation data D21 which is obtained through the transistors Q1 to Q4 is supplied to this latch cell through an NMOS transistor Q9 which operates in accordance with a sampling clock sck (an inverted signal of the sampling clock sck on the odd number column side). In addition, in the serial-parallel converter 56, an inverted output and a non-inverted output from the latch cell constituted by the transistors Q5 to Q8 are supplied to a CMOS inverter having an NMOS transistor Q10 and a PMOS transistor Q11, and a CMOS inverter having an NMOS transistor Q12 and a PMOS transistor Q13, respectively. An inverted output from the gradation data D21 which is obtained through the transistors Q1 to Q4 is inputted to this latch cell including the inverter having the transistors Q10 and Q11 through an NMOS transistor Q14 which operates in accordance with the sampling clock sck (an inverted signal of the sampling clock sck on the odd number column side). Similarly, a voltage of 6 [V] of the power source is supplied to those latch cells and inverters through a PMOS transistor Q15 which operates in accordance with the sampling clock sck (the inverted signal of the sampling clock sck on the odd number column side). Thus, in the serial-parallel converter 56, a 1st latch portion is constituted by those transistors Q5 to Q15. The 1st latch portion enlarges the amplitude of the inverted output and non-inverted output of the gradation data D21 which are obtained through the transistors Q1 to Q4 and latches the resulting outputs in accordance with the sampling clock sck.

In addition, in the serial-parallel converter 56, a CMOS inverter having an NMOS transistor Q27 and a PMOS transistor Q18, and a CMOS inverter having an NMOS transistor Q19 and a PMOS transistor Q20 constitute a CMOS latch cell which is structured in the form of a comparator. The power source voltage of 6 [V] is supplied to this CMOS latch cell. The latch results from the 1st latch portion are supplied to this CMOS latch cell through NMOS transistors Q21 and Q22. Here, the sampling clock sck is supplied to the NMOS transistors Q21 and Q22 through an inverter having transistors Q23 and Q24. In the serial-parallel converter 56, the latch results obtained from the latch cell having the transistors Q17 to Q20 are outputted to a subsequent data outputting circuit through a CMOS inverter having an NMOS transistor Q26 and a PMOS transistor Q27. In the serial-parallel converter 56, those transistors Q21 to Q27 constitute a 2nd latch portion.

Conversely to the structure as shown in FIG. 9, the data outputting circuits 610 and 61E receive as their inputs outputs from the sampling latches 580 and 58E in the system having the power source voltage of 6 [V], and output the data through the system having the power source voltage of 3.3 [V].

Thus, in this embodiment, the sampling latches 580 and 58E constitute a data converting circuit for enlarging the amplitude of the gradation data D21, for successively and cyclically sampling the resulting gradation data D21 to convert the sampled data into the data of a plurality of systems. The data outputting circuits 610 and 61E constitute a level shifting circuit for reducing the amplitudes of the data of a plurality of systems obtained from the data converting circuit and for outputting the gradation data of a plurality of systems.

According to this second embodiment, the gradation data of the systems is sampled by the corresponding horizontal driving circuits at the timing corresponding to the sampling when the gradation data is distributed to a plurality of systems. The gradation data is enlarged with its amplitude, and sequentially and cyclically sampled to be converted into the data of a plurality of systems. Also, the amplitudes of the data of a plurality of systems are reduced and the gradation data of a plurality of systems is generated. As a result, since the second embodiment is applied to the case where the gradation data is processed at the high transfer rate, the same effects as those of the first embodiment can be obtained.

### (3) Third Embodiment

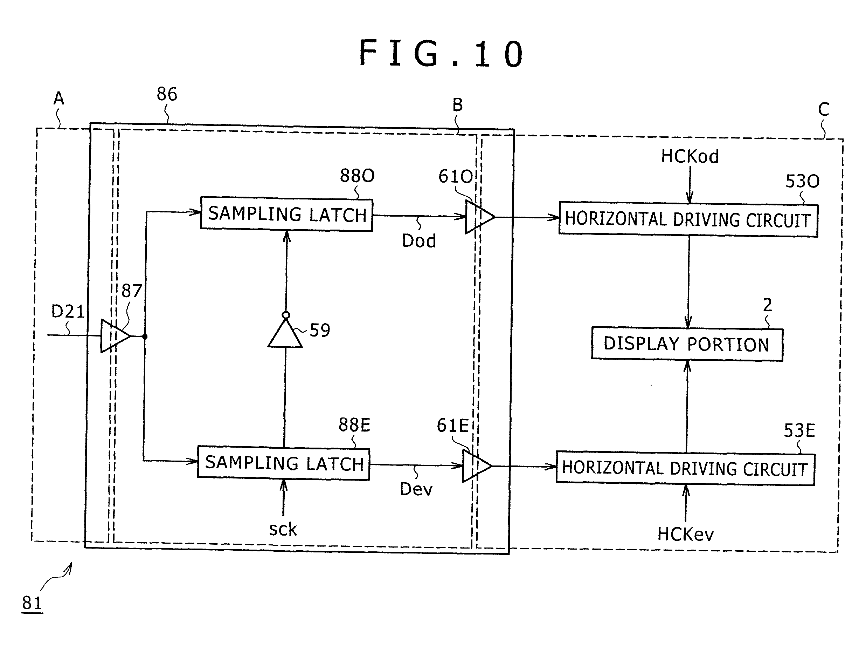

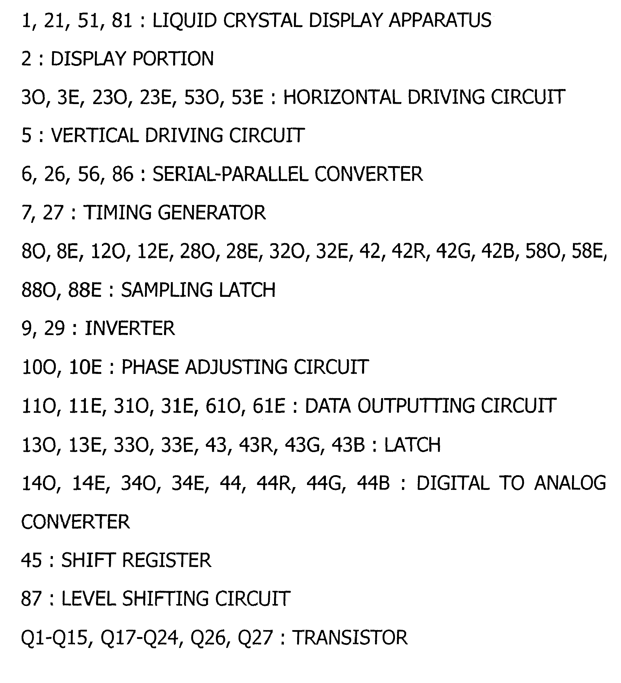

FIG. 10 is a block diagram showing a liquid crystal display apparatus 81 according to a third embodiment of the present invention. This embodiment, similarly to the second embodiment, is applied to the case where the gradation data D21 is processed at the high transfer rate and displayed in the form of an image. In this case, in a serial-parallel converter 86, the gradation data D21 is enlarged with its amplitude, and sequentially and cyclically sampled to be converted into data of a plurality of systems. The amplitudes of the data of a plurality of systems are then reduced, and gradation data of a plurality of systems is generated.

Thus, in this embodiment, in the serial-parallel converter 86, a level shifting circuit 87 enlarges the amplitude of the gradation data D21 in advance. In addition, subsequent sampling latches 880 and 88E sequentially and cyclically sample the gradation data D21 to convert the sampled data into the data of a plurality of systems. Data outputting circuits 610 and 61E restore the amplitudes of the data to the original ones, and output the resulting data.

Thus, in this embodiment, the level shifting circuit 87, and the sampling latches 880 and 88E constitute a data converting circuit for enlarging the amplitudes of the gradation data D21 and for sequentially and cyclically sample the resulting data to convert the sampled data into the data of a plurality of systems.

According to the third embodiment, even when the gradation data D21 is enlarged with its amplitude in advance and processed, the same effects as those of the second embodiment can be obtained.

### (4) Other Embodiments

At that, in the above-mentioned embodiments, the description has been given with respect to the case where when the gradation data D11 having the gradation data corresponding to the pixels of red, blue and green as one set is distributed to the two systems and processed and the case where the gradation data D21 corresponding to the pixels is distributed to the two systems and processed. However, the present invention is not limited to those cases. For example, the gradation data can be distributed to three systems in correspondence to the pixels of red, blue and green, and processed. Thus, the number of systems can be variously set whenever necessary.

In addition, in the above-mentioned embodiments, the description has been given with respect to the case where the horizontal driving circuits are separately disposed on the upper and lower sides of the display portion. However, the present invention is not limited to this case, and can also be generally applied to a case where the horizontal driving circuits are collectively disposed on one of the upper and lower sides of the display portion when necessary.

Also, in the above-mentioned embodiments, the description has been given with respect to the case where the present invention is applied to the liquid crystal display apparatus. However, the present invention is not limited thereto, and can be generally applied to the various kinds of flat display apparatuses such as an Electro Luminescence (EL) display apparatus.

As set forth hereinabove, according to the present invention, the gradation data of the systems is sampled by the corresponding horizontal driving circuits at the timing corresponding to the sampling when the gradation data is distributed to a plurality of systems. As a result, the configuration can be simplified and the power consumption can be reduced as compared with the conventional flat display apparatus.

### Industrial Applicability

The present invention relates to the flat display apparatus, and for example, can be applied to the liquid crystal display apparatus in which the driving circuits are formed integrally with one another on the insulating substrate.

## Claims

1. A flat display apparatus for successively receiving as its input gradation data representing brightness of pixels and for displaying an image based on the gradation data on a predetermined display portion, said flat display apparatus comprising:
a serial-parallel converter for sequentially and cyclically sampling the gradation data to convert the sampled gradation data into gradation data of a plurality of systems; and
a plurality of horizontal driving circuits provided in correspondence to the gradation data of the systems for setting gradations for pixels of corresponding columns of said display portion in correspondence to the gradation data of the corresponding systems,
wherein said horizontal driving circuit has a plurality of sampling circuits for successively sampling the gradation data of the corresponding systems to distribute the gradation data of the corresponding systems to the corresponding columns, and a digital to analog converter for setting levels of output signals to the columns based on the sampling results from said sampling circuits,
said serial-parallel converter outputs the gradation data of the plurality of systems to the corresponding horizontal driving circuits, respectively, at timing corresponding to the sequentially cyclic sampling, and
said horizontal driving circuits of the systems sample the gradation data of the corresponding systems in said plurality of sampling circuits, respectively, at timing corresponding to sequentially cyclic sampling in said serial-parallel converter.

2. The flat display apparatus according to claim 1, wherein said serial-parallel converter, said horizontal driving circuits of the plurality of systems, and a timing generator for outputting timing signals as operational references to said serial-parallel converter and said horizontal driving circuits of the plurality of systems are formed on an insulating substrate of said display portion.

3. The flat display apparatus according to claim 1, wherein the plurality of systems are systems corresponding to odd number columns and even number columns in said display portion, and said horizontal driving circuits of the systems are disposed on upper and lower sides of said display portion, respectively.

4. The flat display apparatus according to claim 1, wherein said serial-parallel converter has a data converter for enlarging an amplitude of the gradation data and for sampling sequentially and cyclically the resulting data to convert the resulting data into the data of the plurality of systems, and a level shifting circuit for reducing the amplitudes of the individual data of the plurality of systems obtained by said data converter to output the gradation data of the plurality of systems.
